(19) Europäisches Patentamt European Patent Office Office européen des brevets

(11) **EP 1 730 868 B1**

(12) **EUROPEAN PATENT SPECIFICATION**

(45) Date of publication and mention
of the grant of the patent:
**18.03.2009 Bulletin 2009/12**

(21) Application number: **04765452.0**

(22) Date of filing: **21.09.2004**

(51) Int Cl.:
***H04L 1/06*** (2006.01)

(86) International application number:
**PCT/EP2004/010576**

(87) International publication number:
**WO 2006/032287 (30.03.2006 Gazette 2006/13)**

(54) **APPARATUS AND METHOD FOR PROVIDING A K-TH SET OF TRANSMIT SEQUENCES**

VORRICHTUNG UND VERFAHREN ZUR BEREITSTELLUNG EINER K-TEN MENGE VON
SENDESEQUENZEN

APPAREIL ET PROCEDE D'APPORT D'UN ENSEMBLE K-EME DE SEQUENCES DE
TRANSMISSION

(84) Designated Contracting States:
**DE GB**

(43) Date of publication of application:
**13.12.2006 Bulletin 2006/50**

(73) Proprietor: **NTT DoCoMo, Inc.**
**Tokyo 100-6150 (JP)**

(72) Inventor: **BAUCH, Gerhard**
**80799 Munich (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
• **DATABASE INSPEC [Online] THE INSTITUTION OF ELECTRICAL ENGINEERS, STEVENAGE, GB; 2004, BAUCH G: "Higher order differential matrix modulation" XP002329158 Database accession no. 8188571 cited in the application & PROCEEDINGS. 2004 IEEE INTERNATIONAL SYMPOSIUM ON INFORMATION THEORY CHICAGO, IL, USA, 27 June 2004 (2004-06-27), page 187, Proceedings. 2004 IEEE International Symposium on Information Theory (IEEE Cat. No. 04CH37522) IEEE Piscataway, NJ, USA ISBN: 0-7803-8280-3**
• **BAUCH G: "DIFFERENTIAL MULTIPLE-LENGTH TRANSMIT DIVERSITY" IEEE COMMUNICATIONS LETTERS, IEEE SERVICE CENTER, PISCATAWAY,US, US, vol. 8, no. 3, March 2004 (2004-03), pages 141-143, XP001192704 ISSN: 1089-7798**
• **DATABASE INSPEC [Online] THE INSTITUTION OF ELECTRICAL ENGINEERS, STEVENAGE, GB; 2003, ZHENG F -C ET AL: "A robust non-orthogonal space-time block code for four transmit antennas" XP002329159 Database accession no. 7839085 & 57TH IEEE SEMIANNUAL VEHICULAR TECHNOLOGY CONFERENCE. VTC 2003, JEJU, SOUTH KOREA, vol. 1, 22 April 2003 (2003-04-22), pages 301-305 vol.1, 57th IEEE Semiannual Vehicular Technology Conference. VTC 2003 (Cat. No. 03CH37431) IEEE Piscataway, NJ, USA ISBN: 0-7803-7757-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 730 868 B1

**EP 1 730 868 B1**

**Description**

The present invention is in the field of telecommunications and, in particular, in the field of the differential space-time modulation.

The usage of multiple antennas at both ends of the wireless link has been shown to provide significant capacity gains n fading environments G.J. Foschini and M.J. Gans: On limits of wireless communications in a fading environment when using multiple antennas, Wireless Personal Communications, 6:311-335, 1998, E. Telatar: Capacity of multi-antenna Gaussian channels, European Transactions on Telecommunications (ETT), 10(6), November/December 1999.

A variety of multiple-input multiple-output (MIMO) schemes including space-time codes and spatial multiplexing has been proposed in order to exploit those capacities. However, most MIMO techniques require knowledge of the channel coefficients at the receiver. This can be obtained from a channel estimation. However, channel estimation is a more sever problem in MIMO systems than in single antenna systems since more subchannels have to be estimated and the energy of pilot symbols has to be distributed over several antennas. Therefore, differential MIMO transmission schemes as proposed in V. Tarokh and H. Jafarkhani: A differential detection scheme for transmit diversity, IEEE Journal on Selected Areas in Communications, 18(7):1169-1174, July 2000, B.L. Hughes: Differential space-time modulation, IEEE Transactions on Information Theory, 46(7):2567-2578, November 2000, B. Hochwald and W. Swelden. Differential unitary space-time modulation, IEEE Transactions on Communications, 48(12) :2041-2052, December 2000 which require no channel estimation at the receiver are attractive alternatives. In general, those schemes can be viewed as differential space-time modulation methods where the constellation consists of unitary matrices. The requirement of the constellation elements to be unitary matrices limits the achievable data rate and performance.

Differential transmit diversity from orthogonal designs has been proposed for two transmit antennas in V. Tarokh and H. Jafarkhani: A differential detection scheme for transmit diversity, IEEE Journal on Selected Areas in Communications, 18(7):1169-1174, July 2000 and generalized to more antennas in H. Jafarkhani and V. Tarokh: Multiple transmit antenna differential detection from generalized orthogonal designs, IEEE Transactions on Information Theory, 47(6): 2626-2631, September 2001.

Unitary differential space-time modulation has been proposed in B. Hochwald and W. Swelden: Differential unitary space-time modulation, IEEE Transactions on Communications, 48(12):2041-2052, December 2000 and in B.L. Hughes: Differential space-time modulation, IEEE Transactions on Information Theory, 46(7):2567-2578, November 2000. A more bandwidth-efficient version of unitary space-time modulation was presented in A. Steiner, M. Peleg, and S. Shamai: Iterative decoding of space-time differentially coded unitary matrix modulation, IEEE Transactions on Signal Processing, 50(10):2385-2395, October 2002.

Differential transmit diversity with multiple amplitude levels was proposed in X.-G. Xia: Differentially en/decoded orthogonal space-time block codes with APSK signals, IEEE Communications Letters, 6(4):150-152, April 2002. This approach uses DAPSK signals as proposed in H. Rohling and V. Engels: Differential amplitude phase shift keying (DAPSK) - a new modulation method for DTVB, International Broadcasting Convention, pages 102-108, 1995 as input for a unitary space-time modulator according to B. Hochwald and W. Swelden: Differential unitary space-time modulation, IEEE Transactions on Communications, 48(12):2041-2052, December 2000.

An extension of differential transmit diversity from orthogonal designs according to V. Tarokh and H. Jafarkhani: A differential detection scheme for transmit diversity, IEEE Journal on Selected Areas in Communications, 18(7): 1169-1174, July 2000 was proposed in G. Bauch: Turbo detection of differential multiple-length transmit diversity, 3rd International Symposium on Turbo Codes and Related Topics, pages 327-330, September 2003. This proposal was restricted to transmit diversity from orthogonal designs. The extension of unitary space-time modulation by an additional matrix norm modulation was proposed in G. Bauch: Differential amplitude and unitary space-time modulation, International ITG Conference on Source and Channel Coding, pages 135-142, January 2004.

Non-unitary space-time modulation based on orthogonal designs with QAM modulation was proposed in M. Tao and R.S. Cheng: Differential space-time block codes, IEEE Globecom Conference, pages 1098-1102, November 2001, Z. Chen, G. Zhu, J. Shen, and Y. Liu: Differential space-time block codes from amicable orthogonal designs, Wireless Communications and Networking Conference (WCNC), pages 768-772, March 2003, C.-S. Hwang, S.H. Nam, J. Chung, and V. Tarokh: Differential space-time block codes using QAM constellations, International Symposium on Personal, Indoor and Mobile Radio Communications (PIMRC), September 2003, C.-S. Hwang, S.H. Nam, J. Chung, and V. Tarokh: Differential space-time block codes using nonconstant modulus constellations, IEEE Transactions on Signal Processing, 51(11):2955-2964, November 2003. However, the above prior art approaches consider hard-output detection only, and are based on orthogonal designs or quasi-orthogonal designs, as described in Yun Zhu, Hamid Jafarkani: Differential Modulation Based on Quasi-Orthogonal Codes, Wireless Communications and Networking Conference, 2004, WCNC 204 IEEE, vol. 1, 21-25, March 2004, pages 531-536.

In the following, the differential space-time modulation scheme will be described.

We consider a flat fading multiple-input multiple-output (MIMO) channel with $n_T$ transmit and $n_R$ receive antennas. The channel coefficients are collected in the matrix

$$H_k = \begin{bmatrix} h_k^{(11)} & \cdots & h_k^{(n_T 1)} \\ \vdots & \ddots & \vdots \\ h_k^{(1 n_R)} & \cdots & h_k^{(n_T n_R)} \end{bmatrix} \qquad (1)$$

where $h_k^{(ij)}$ is the channel coefficient from transmit antenna $i$ to receive antenna $j$ at time $k$.

In frequency-selective environments, the flat fading channel can e.g. be accomplished by OFDM with a sufficiently large guard interval.

At the receiver, we observe

$$Y_k = H_k X_k + N_k \qquad (2)$$

where

$$X_k = \begin{bmatrix} x_{k,1}^{(1)} & \cdots & x_{k,L}^{(1)} \\ \vdots & \ddots & \vdots \\ x_{k,1}^{(n_T)} & \cdots & x_{k,L}^{(n_T)} \end{bmatrix} \qquad (3)$$

and

$$Y_k = \begin{bmatrix} y_{k,1}^{(1)} & \cdots & y_{k,L}^{(1)} \\ \vdots & \ddots & \vdots \\ y_{k,1}^{(n_R)} & \cdots & y_{k,L}^{(n_R)} \end{bmatrix} \qquad (4)$$

contain the transmitted and received symbols, respectively, and

$$N_k = \begin{bmatrix} n_{k,1}^{(1)} & \cdots & n_{k,L}^{(1)} \\ \vdots & \ddots & \vdots \\ n_{k,1}^{(n_R)} & \cdots & n_{k,L}^{(n_R)} \end{bmatrix} \qquad (5)$$

are the noise samples which are assumed to be independent and Gaussian with variance

$$\sigma^2 = \frac{N_0}{2} \qquad (6)$$

per real dimension.

One example of differential space-time modulation schemes is differential unitary with space-time modulation.

Differential unitary space-time modulation was introduced simultaneously in B. Hochwald and W. Swelden: Differential unitary space-time modulation, IEEE Transactions on Communications, 48(12):2041-2052, December 2000 and in B.L. Hughes: Differential space-time modulation. IEEE Transactions on Information Theory, 46(7):2567-2578, November 2000. A group of $b_1 = \log_2(M_1)$ data bits $u_k^{(1)} = u_{k,1}, \ldots, u_{k,b_1}$ , $u_{k,t} \in \{+1, -1\}$, is mapped on an $L \times L$ into matrix $C_k$. The $n_T \times L$ transmit matrix $X_k$ is determined by $C_k$ and the previously transmitted matrix $X_{k-1}$ according to the differential encoding rule

$$X_k = X_{k-1} C_k \qquad (7)$$

In order to allow non-coherent detection, $C_k$ is unitary, i.e.

$$C_k C_k^H = I_L \qquad (8)$$

where $C^H$ denotes the conjugate transpose of $C$ and $I_L$ is th $L \times L$ identity matrix. A unitary reference matrix $X_0$ has to be transmitted first. All transmit matrices $X_k$ are unitary. Plugging (7) into (2) yields.

$$Y_k = Y_{k-1} C_k - N_{k-1} C_k + N_k \qquad (9)$$

This describes the transmission of the info matrix $C_k$ over an equivalent channel with $L$ transmit and $n_R$ receive antennas, channel coefficients $\tilde{H} = Y_{k-1}$ and - since $C_k$ is unitary - a noise variance of $\tilde{\sigma}^2 = 2\sigma^2$ per real dimension at each receive antenna.

Since unitary space-time modulation is based on PSK symbols, the performance will be poor for more bandwidth-efficent transmission, i.e. when the unitary matrix is based on $M\text{-}PSK$ symbols for $M > 8$.

Extensions of unitary space-time modulation by an additional amplitude or matrix norm modulation for higher bandwidth-efficiency with improved performance have been proposed in X.-G: Xia: Differentially en/decoded orthogonal space-time block codes with APSK signals, IEEE Communications Letters, 6(4):150-152, April 2002, G. Bauch: A bandwidth-efficient scheme for non-coherent transmit diversity. In IEEE Globecom, December 2003, G. Bauch: Differential amplitude and unitary space-time modulation, International ITG Conference on Source and Channel Coding, pages 135-142, January 2004, G. Bauch: Higher order differential matrix modulation, IEEE International Symposium on Information Theory (ISIT), June/July 2004. In X.-G. Xia: Differentially en/decoded orthogonal space-time block codes with APSK signals, IEEE Communications Letters, 6(4):150-152, April 2002, the symbols which are input to the differential space-time modulator are taken from an APSK constellation, i.e. concentric PSK constellations with different amplitude.

In G. Bauch: A bandwidth-efficient scheme for non-coherent transmit diversity, IEEE Globecom, December 2003, extended the differential space-time block codes according to V. Tarokh, H. Jafarkhani: A differential detection scheme for transmit diversity, IEEE Journal on Selected Areas in Communications, 18(7):1169-1174, July 2000 by an additional differential amplitude modulation are disclosed. A more general approach which can be applied as an extension of any differential unitary space-time modulation scheme was proposed in G. Bauch: Differential amplitude and unitary space-time modulation, International ITG Conference on Source and Channel Coding, pages 135-142, January 2004, G. Bauch: Higher order differential matrix modulation, IEEE International Symposium on Information Theory (ISIT), June/July 2004. Here, the input bits of the differential space-time modulator are grouped into two sets. The first $b_1$ bits are mapped on a unitary matrix $C_k$ as described in the previous section. The last $b_2$ bits determine the amplitude difference of the transmit matrix $X_k$ compared to the previously transmitted matrix $X_{k-1}$. A disadvantage of this scheme is that the amplitude modulation is performed per matrix rather than per symbol which results in reduced bandwidth-efficiency especially for larger matrices.

It is the object of the present invention to provide a differential space-time modulation scheme with an increased bandwidth-efficiency.

This object is achieved by an apparatus for providing a k-th set of transmit sequences according to claim 1 or by a method according to claim 17, or by a computer program according to claim 19.

The present invention is based on the finding that a bandwidth-efficiency of a differential space-time modulation scheme can be increased when using non-orthogonal information matrices representing an information sequence to be transmitted instead of using orthogonal designs.

In this context, the term "non-orthogonal matrix" relates to a matrix having the property that a product between the matrix and its conjugated (complex conjugate) and transposed version results in a non-diagonal matrix, i.e. in a matrix having entries being different from zero not only in the diagonal. For example, a product between a row and a conjugate transposed version of another row or, equivalently, a product between a column and a conjugate transposed version of another column differs from zero in a case of a non-orthogonality.

More specifically, it has been found that an increased information amount can be transmitted per dimension of a non-orthogonal information matrix (code matrix) representing the information to be transmitted than in the case of orthogonal designs since, e.g. in a case of the same modulation scheme, a longer information sequence can be mapped onto a non-orthogonal information matrix than onto a orthogonal information matrix with the same dimension. Accordingly, a dimension reduction of an information matrix can be introduced while transmitting the same information amount when compared with the prior art approaches. Therefore, e.g. less transmitting antennas are required in order to transmit same information.

The increased bandwidth-efficiency is due to the fact, that, in accordance with the present invention, the entries of the information matrix are chosen independently from each other which results in non-orthogonal rows or columns of the information matrix. Since the entries are independent from each other, the rows and/or the columns of the inventive information matrix are independent from each other which is a more efficient way to place bits in a matrix since the prior art constrains on a matrix design due to a required orthogonality are relaxed. Since a number of possible different matrices is increased, more information can be assigned to an information matrix when compared with the prior art orthogonal approach.

The present invention further provides a solution to a problem associated with an influence of the non-orthogonal information matrices on an energy of transmit sequences since, due to the inventive non-orthogonal design, an influence on an energy or power of the transmit sequences can be different when different matrices are used which may cause a high power amplification or a vanishing of a signal which can deteriorate information detection in a receiver.

The present invention further provides an efficient detection concept, wherein the energy scaling due to the non-orthogonal information matrix (code matrix) is explicitly taken into account.

Further embodiments of the present invention are described with respect to the following Figures, in which:

Fig. 1 shows a block diagram of an apparatus for providing a k-th set of transmit sequences in accordance with an embodiment of the present invention;

Fig. 2 shows a transmitter in accordance with an embodiment of the present invention;

Fig. 3 shows a non-coherent soft-output detector in accordance with an example of the present invention;

Fig. 4 shows an equivalent channel module with non-coherent detection;

Fig. 5 demonstrates a parameter estimation scheme in accordance with an example of the present invention;

Fig. 6 demonstrates a parameter estimation scheme in accordance with an example of the present invention;

Fig. 7 shows a block diagram of a non-coherent soft-output detector for non-unitary orthogonal design;

Fig. 8 shows an equivalent channel model for orthogonal designs with non-coherent detection; and

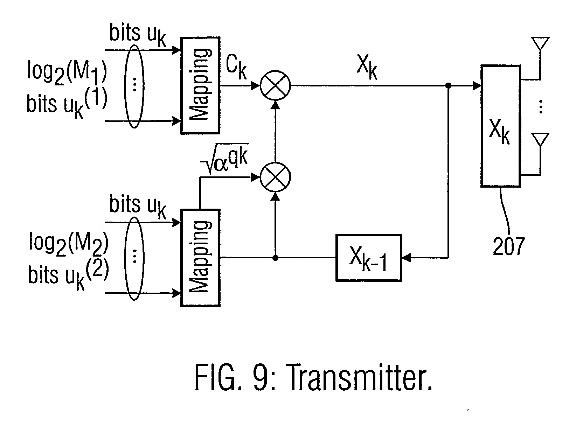

Fig. 9 shows an unitary differential space-time modulation transmitter.

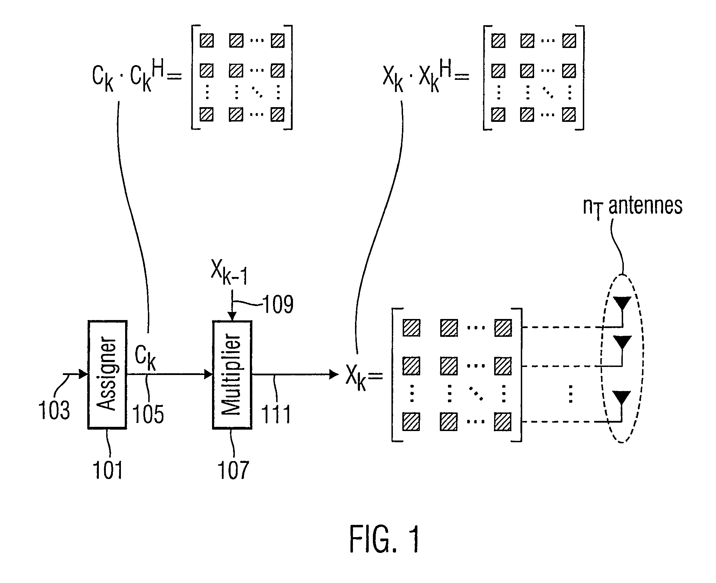

Fig. 1 shows a block diagram of an apparatus for providing a k-th set of transmit sequences according to an embodiment of the present invention. The apparatus comprises an assigner 101 having in input 103 and an output 105, the output 105 being coupled to a multiplier 107. The multiplier 107 comprises a further input 109 and an output 111.

The apparatus shown in Fig. 1 is configured for providing the k-th set of transmit sequences from the information sequence being provided via the input 103 to the assigner 101, wherein the k-th set of transmit sequences is to be transmitted within a k-th time interval.

The assigner 101 is configured for assigning a code matrix $C_k$ of a plurality of code matrices to the information sequence, wherein the code matrix comprises code matrix entries being, in accordance with the present invention, chosen independently from each other. In accordance with a differential space-time modulation scheme, the code matrix assigned to an information sequence represents the information sequence i.e. the information to be transmitted.

In order to unambiguously recover the transmitted information at a receiver, the assignment of a certain code matrix (information matrix) to a certain information sequence is preferably unique. Moreover, in accordance with the present invention, the dimension of the code matrix is not dependent on the size, i.e. on the length of the information sequence since the entries of the code matrix, preferably representing signal space constellation, are independent from each other. Therefore, even 2x2 matrices can be assigned to information sequences having more than two entries.

Since the inventive code matrix results from a non-orthogonal design, a product between the code matrix and its conjugate transposed version results in a non-diagonal matrix, as is depicted in Fig. 1, wherein the operator "*H*" denotes conjugation and transposition.

The assigner 101 may be configured for analyzing the input sequence value-by-value in order to assign the code matrix associated with the input sequence. The code matrix, replacing the information sequence, is provided via the output 105 to the multiplier 107, the multiplier 107 being configured for multiplying the code matrix by a *(k-1)-th* set of transmit sequences $X_{k-1}$ using a multiplication scheme for obtaining the k-th set of transmit sequences $X_k$, wherein *(k-1)-th* set of transmit sequences has been transmitted within a *(k-1)-th* time interval.

In accordance with the present invention, the code matrix entries are arranged to form rows and columns of the code matrix, wherein, depending on the multiplication scheme, at least a column is non-orthogonal with respect to another column, so that a product between the column and e.g. a complex conjugate version of the another column is equal to zero, or wherein at least a row is non-orthogonal with respect to another row so that a product between the row and e.g. a complex conjugate version of the another row is equal to zero.

In accordance with a further aspect of the present invention, the code matrix is non-unitary and is different form a scaled version of a diagonal matrix, e.g. an identity matrix.

The multiplier 107 is configured for applying a multiplication scheme in order to provide the k-th set of transmit sequences, wherein the multiplication scheme may comprise multiplying the *(k-1)-th* set of transmit sequences from the right by the code matrix or vice versa.

More specifically , the transmit sequences in the *(k-1)-th* set of transmit sequences may be arranged to form a *(k-1)-th* transmit matrix, the *(k-1)-th* transmit matrix comprising entries being arranged to form rows and columns.

If the multiplication scheme comprises multiplying rows of the *(k-1)-th* transmit matrix by columns of the code matrix, i.e. multiplying the *(k-1)-th* transmit matrix by the code matrix from the right, than a column of the code matrix is non-orthogonal with respect to another column of the code matrix. Correspondingly, if the multiplication scheme comprises multiplying columns of the *(k-1)-th* transmit matrix by rows of the code matrix, i.e. multiplying the *(k-1)-th* transmit matrix by the code matrix from the left, then at least a row of the code matrix is non-orthogonal with respect to another row of the code matrix.

In this context, e.g. a row of the code matrix is non-orthogonal with respect to a column of a transmit matrix, when e.g. a product between the row and a complex conjugate version of the column is different from zero or vice versa.

Although it is sufficient to introduce only one row or column being non-orthogonal with respect other rows or columns for increasing the bandwidth-efficiency, preferably any row of the code matrix is orthogonal with respect to any other row of the code matrix and/or any column of the code matrix is non-orthogonal with respect to any other column of the code matrix.

In accordance with the present invention, the k-th set of transmit sequences may comprise a plurality of transmit sequences, each transmit sequences to be transmitted at a different time instant within the k-th time interval. As is depicted in Fig. 1, the set of transmit sequences, $X_k$, is arranged to form a matrix having columns and rows, wherein a column of the matrix comprises the transmit sequence to be transmitted at a time instant by $n_T$ transmit antennas. Correspondingly, the entries of the matrix $X_k$ in a row correspond to the timely succeeding entries to be transmitted by a transmit antenna of $n_T$ transmitter antennas.

As is depicted in Fig. 1, a transmit sequence from the k-th set of transmit sequences may comprise $n_T$ values, each value to be transmitted at a time instant by a different transmitting point comprising a transmit antenna of $n_T$ transmitting points. In other words, the matrix $X_k$ is transmitted column-wise within the k-th time interval, wherein each column is to be transmitted at a different time instant within the k-th transmit interval. The k-th time interval is an interval associated with subsequent transmission of the columns of the k-th transmit matrix, i.e. with subsequent transmission of the transmit sequences in the k-th set of transmit sequences.

Care has to be taken in the choice of the set of code matrices comprising a code matrix $C_k$ in order to avoid that a differential encoding process yields zero sequences. This can e.g. be avoided if either a column or each column or a row or each row of $C_k$ is multiplied with a specific phase factor comprising a term $e^{j\varphi_i}$, i denoting a row or column index. Alternatively, all entries can be multiplied with a specific phase factor.

Preferably, the phase factor has a unit magnitude in order to avoid additional attenuation or amplification. However, a magnitude of the phase factor may be different from one so that additional attenuation or amplification can be introduced if required.

In accordance with the present invention, the apparatus may therefore be further configured for multiplying a row or a column of the code matrix by the phase factor for avoiding zero-sequences when multiplying the code matrix by (k-1)-th set of transmit sequences. As mentioned above, each row or each column may be multiplied by a different or by the same phase factor. Moreover, only rows or columns being associated with zero-sequences, e.g. with vanishing sequences being a result of the multiplication, may be multiplied by a phase factor.

In accordance with the present invention, the code matrix entries represent signal space constellation points and are therefore, in general, complex valued. For example, the code matrix entries represent signal space constellation points being associated with the same mapping scheme and being independently chosen. However, the code matrix entries may represent signal space constellation points belonging to different mapping schemes. For example, a code matrix entry may represent a signal space constellation point according to a mapping scheme and a further matrix entry may represent a signal space constellation point according to a further mapping scheme, the mapping scheme being different from the further mapping scheme. For example, the mapping scheme is a PSK (PSK = phase shift keying) scheme and the further mapping scheme 16-QAM (QAM = quaternary amplitude modulation).

The mapping scheme may comprise different signal space constellation points having different phases, e.g. PSK. Furthermore, the mapping scheme may comprise signals space constellation points having different amplitudes, i.e. different absolute values. This case corresponds to a mapping scheme, e.g. 16-QAM, where different signal space constellation points are associated with different radiuses in a signal space constellation domain, each radius representing an absolute value or, in other words, amplitude of a signal space constellation point.

For example, the mapping scheme may be one of the following mapping schemes: QPSK (QPSK = quaternary phase shift keying), PAM (PAM = pulse amplitude modulation), QAM, PSK, M-QAM, M-PSK, M being a number equal to or greater than 1 and defining a M-ary mapping scheme.

As has been mentioned above, due to a non-orthogonality of the code matrix, the resulting transmit sequences from a set of transmit sequences may be associated with different energies, so that, in a receiver, detection errors may occur during detecting the code matrix due to high power amplification or a vanishing of a signal.

In accordance with a further aspect of the present invention, the apparatus for providing the k-th set of transmit sequences may therefore be configured for normalizing the k-th set of transmit sequences using the normalization factor being derivable e.g. from previously transmitted transmit sequences.

According to the present invention, the normalization factor may be determined by an energy of a *(k-1)-th* transmit matrix being formed by a *(k-1)-th* set of transmit sequences. In this case, the normalization factor may be different for each set of transmit sequences.

In accordance with a further aspect of the present invention, the normalization factor may be determined by an expectation value for an energy of a set of transmit sequences, e.g. for an energy of the k-th set of transmit sequences or the *(k-1)-th* set of transmit sequences.

In order to normalize the k-th set of transmit sequences, the normalization factor may be introduced by e.g. multiplying the *(k-1)-th* set of transmit sequences by the normalization factor for multiplying the code matrix by the normalization factor, i.e. for performing a pre-multiplication. Correspondingly, a post multiplication can be performed, wherein the k-th set of transmit sequences may be multiplied by the normalization factor prior to be output by the multiplier 107. The pre-multiplication or the post-multiplication can be performed by the multiplier 107.

It is to be noted that the *(k-1)-th* set of transmit sequences is multiplied after transmission of the *(k-1)-th* set of transmit sequences.

If a normalization factor to be used is inverse to that described above, the pre-multiplication or the post-multiplication can be replaced by a division by the normalization factor or by a multiplication by an inverse of the normalization factor.

In accordance with the present invention, the transmit sequences may iteratively be provided by the inventive apparatus. Therefore, in a next iteration step, a *(k+1)-th* set of transmit sequences will be provided on a basis on the k-th set of transmit sequences, as has been described above.

However, in order to initialize the iteration, a reference set of transmit sequences is to be provided. Preferably, the reference set of transmit sequences is an identity matrix comprising ones in the main diagonal and zeros elsewhere.

In accordance with a further aspect of the present invention, the apparatus may be configured for multiplying a row of the code matrix by a de-orthogonalization factor if the row of the code matrix is orthogonal to a transmit sequence, or for multiplying a columns of the code matrix by a de-orthogonalization factor if the column of the code matrix is orthogonal to a transmit sequence. For example, the de-orthogonalization factor is chosen in dependence on a set of transmit sequences. Preferably, the de-orthogonalization factor is a phase factor having an amplitude equal to one.

The present invention further provides a transmit apparatus comprising the apparatus for providing the k-th set of transmit sequences from an information sequence, as has been described above.

For example, each transmit sequence in the k-th set of transmit sequences comprises $n_T$ values, each value to be transmitted by a different transmitting point of $n_T$ transmitting points, the $n_T$ transmitting point being configured for transmitting the k-th set of transmit sequences within a k-th time interval, wherein values of a transmit sequence are simultaneously transmitted by the $n_T$ transmitting points, each transmitting point comprising a transmit antenna.

More specifically, the $n_T$ transmitting points are configured for simultaneously transmitting $n_T$ values of a transmit sequence at a time instant within the k-th time interval, and for simultaneously transmitting $n_T$ values of a further transmit sequence in a further time instant within the k-th time interval.

Preferably, the inventive apparatus for providing the k-th set of transmit sequences is configured for serving as a differential space-time modulator.

In order to detect information being represented by the code matrix at a receiver, an example of the present invention further provides an apparatus for deriving a code matrix from a k-th set of received sequences and from a *(k-1)-th* set of received sequences.

In this context, the k-th set of received sequences is a receivable version of a k-th set of transmit sequences, and the *(k-1)-th* set of received sequences is a receivable version of a *(k-1)-th* set of transmit sequences, the *(k-1)-th* set of transmit sequences resulting from multiplying the *(k-1)-th* sequences by the code matrix representing the information to be transmitted, as has been described above.

In order to take a non-orthogonality of the transmitted code matrix into account, the k-th set of transmit sequences may comprise a normalization factor being introduced to normalize an energy of the set of transmit sequences, the energy normalization factor, being e.g. dependent on the *(k-1)-th* set of transmit sequences, as has been described in connection with the inventive apparatus for providing transmit sequences.

The apparatus for deriving the code matrix may further comprise an estimator for estimating the normalization factor using the *(k-1)-th* set of received sequences to obtain an estimate of the normalization factor, the normalization factor being required for the subsequent detection being performed by a detector for detecting the code matrix using the k-th set of received sequences, the *(k-1)-th* set of received sequences and the estimate of the normalization factor.

In accordance with an example of the present invention, the detector is configured for taking the normalization factor into account while detecting the code matrix using the k-th set of received sequences and the *(k-1)-th* set of received sequences.

As has been described above, at a transmitter, the normalization factor may be determined using the previously transmitted set of transmit sequences. In other words, the normalization factor can be determined iteratively.

Accordingly, the estimator may be configured for iteratively estimating the k-th normalization factor from an energy ratio between the *(k-1)-th* set of received sequences, a *(k-2)-th* set of received sequences and a *(k-1)-th* normalization factor, wherein the *(k-2)-th* set of received sequences is a receivable version of a *(k-2)-th* set of transmit sequences, the *(k-1)-th* normalization factor being comprised by the *(k-1)-th* set of transmit sequences.

In accordance with a further aspect to the present invention, the estimator may be configured for determining the (k+1)-th normalization factor $A_{k+1}$ based on the following approximation:

$$v_k = \frac{\text{trace}\{Y_k^H Y_k\}}{\text{trace}\{Y_{k-1}^H Y_{k-1}\}} \approx \frac{\alpha_k}{A_k^2}$$

$$A_{k+1}^2 = v_k A_k^2$$

wherein $Y_{k-1}$ denotes a (k-1)-th and $Y_k$ a k-th set of received sequences, both being arranged to form matrices, and $\alpha_k$ denotes a factor.

Upon estimating the normalization factor, the detector may be configured for detecting the code matrix using e.g. equation (24) being derived later.

The detector may be a soft-output detector being configured for providing soft-outputs values denoting a reliability of the estimate of the code matrix.

For example, the detector is configured for detecting the code matrix based on formula (31) being derived later.

Moreover, the detector may be configured for detecting an entry of the code matrix based on the formula 41. In the case of a non-orthogonal design, this approach is a further approximation leading to a further complexity reduction.

In order to extract information being represented by the (detected) code matrix, the apparatus for deriving the code matrix may further comprise means for assigning an information sequence from a plurality of information sequences to the code matrix in order to obtain an information sequence comprising the information being transmitted. In other words, the means for assigning assigns the information sequence being e.g. uniquely linked with the code matrix.

In accordance with a further aspect the present invention further provides a receiver apparatus comprising the apparatus for deriving a code matrix from a k-th set of received sequences, wherein each received sequence is receivable by a plurality of received antennas, the plurality of received antennas corresponding to a number of values comprised by the received sequence.

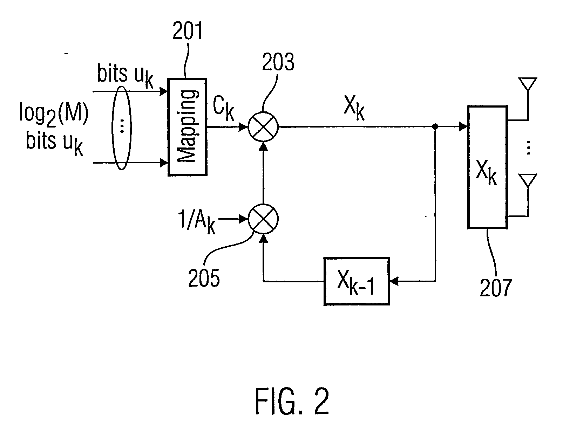

Further embodiments and examples of the present invention will be described with respect to figures 2 to 8.

Fig. 2 shows a transmitter according to an embodiment of the present invention. The transmitter comprises an assigner 201 being configured for assigning information bits to a code matrix $C_k$. The transmitter further comprises a multiplying element 203, the multiplying element 203 being configured for multiplying the code matrix $C_k$ by a normalized version of a *(k-1)-th* set of transmit sequences being arranged to form a matrix $X_{k-1}$, as is depicted in Fig. 2.

In addition, the transmitter further comprises a multiplying element 205 being configured for multiplying the *(k-1)-th* set of transmit sequences by a normalization factor $1/A_k$.

The k-th set of transmit sequences being e.g. arranged to form a matrix $X_k$ is then provided through a further processing block 207 being configured for providing a transmit signal from the k-th set of transmit sequences to be transmitted by a plurality of antennas depicted in Fig. 2.

The inventive approach increases the bandwidth-efficiency using non-orthogonal designs for the code matrix (information matrix) to be used in a differential space-time modulation scheme. Furthermore, the inventive approach increases a bandwidth-efficiency by using non-unitary differential space-time modulation schemes.

In contrast to the prior art, we do not perform separate unitary matrix modulation and amplitude modulation. Instead, a differential matrix modulation with non-unitary matrices is performed. Referring again to the differential transmitter depicted in Fig. 2, the input bits for the transmit matrix $X_k$ are mapped on a matrix $C_k$ with complex entries $c_{k,nm}$. In general, any mapping is possible. However, two approaches are promising: $C_k$ can be an orthogonal design as defined e.g. in V. Tarokh, H. Jafarkhani, and A.R. Calderbank. Space-time block codes from orthogonal designs. IEEE Transactions on Information Theory, 45(5):1456-1467, June 1999 the entries of which are taken from a QAM modulation.

As mentioned above, Care has to be taken in the choice of the set of code matrices comprising a code matrix $C_k$ in order to avoid that a differential encoding process yields zero sequences. This can e.g. be avoided if either a column or each column or a row or each row of $C_k$ is multiplied with a specific phase factor comprising a term $e^{j\varphi i}$, i denoting a row or column index. Alternatively, all entries can be multiplied with a specific phase factor.

Another approach is to fill the $L{\times}L$ matrix $C_k$ with independent symbols of a PSK or QAM constellation. If the cardinality of the modulation scheme is M, we can transmit $M^{L \cdot L}$ bits per matrix. While non-unitary differential space-time modulation based on orthogonal designs with QAM symbols has been proposed e.g. in M. Tao and R.S. Cheng. Differential space-time block codes. In IEEE Globecom Conference, pages 1098-1102, November 2001, our preferred approach is to use any mapping of bits to a matrix $C_k$ and particularly to fill the matrix with $L \cdot L$ independent PSK or QAM symbols.

In unitary space-time modulation, the differential encoding

$$X_k \; = \; X_{k-1} C_k \qquad\qquad\qquad (10)$$

does not change the transmit energy since $C_k$ and $X_{k-1}$ are unitary. However, in case of non-unitary matrices $C_k$, we need to normalize the transmit matrix by multiplication with the normalization factor $1/A_k$, i.e.

$$X_k \; = \; \frac{1}{A_k} X_{k-1} C_k \qquad\qquad\qquad (11)$$

in order to meet the energy constraint

$$\varepsilon_{k,l}\left\{\sum_{n=1}^{n_T} \left|x_{k,l}^{(n)}\right|^2\right\} \; = \; E_s \qquad\qquad\qquad (12)$$

where $\varepsilon_{k,l}$ denotes expectation with respect to $k$ and $l$ and $E_s$ is the total verage transmit energy per time slot, i.e. for a hypersymbol $x_k^{(1)}, \cdots, x_k^{(n_T)}$ which consists of the symbols which are transmitted simultaneously from different antennas. Normalization avoids blowing up the transmit power as well as a vanishing signal. Furthermore, normalization reduces the peak to average power ratio (PAPR).

If $C_k$ is an orthogonal design, we have

$$C_k C_k^H \; = \; \alpha_k I_L \qquad\qquad\qquad (13)$$

where $I_L$ is the $L \times L$ identity matrix. Consequently, the amplitude of the matrix $C_k$ can easily be defined as $\alpha_k$. Therefore, the energy constraint (12) is met by choosing the normalization factor.

$$A_k = \sqrt{\alpha_{k-1}} \qquad (14)$$

However, if no orthogonal designs are used, the amplitude of the matrix is less clear. We propose three normalization options:

1. The normalization factor is determined by the energy of the previously transmitted matrix:

$$A_k = \sqrt{\frac{1}{L}\operatorname{trace}X_{k-1}X_{k-1}^{H}} \qquad (15)$$

This guarantees that the energy constraint (12) is met. In case of an orthogonal design, this is equivalent to (14). Otherwise, this is a new proposal.
2. The normalization factor is determined by the expectation of the energy of the transmit matrix:

$$A_k = \sqrt{\frac{1}{L}\varepsilon_k\{\operatorname{trace} X_kX_k^{H}\}} = \sqrt{E_s} \qquad (16)$$

This means that the normalization factor is the same for all transmitted matrices which simplifies the soft-output detector as shown later.
3. The normalization factor is an arbitrary constant value for all transmit matrices:

$$A_k = \operatorname{const} \qquad (17)$$

This includes the special case of no normalization, i.e. $A_k = 1$. Again, the same normalization factor is used for all transmitted matrices which simplifies the soft-output detector as shown later. However, here we cannot control the transmit energy. This proposal might at best be suitable for short block lengths.

In summary, at the transmitter side, our new proposal comprises using non-unitary information matrices $C_k$ different from orthogonal designs with QAM symbols. Furthermore, we propose several possibilities for the choice of the normalization factor. Apart from using the amplitude $a_{k-1}$ according to (14) in conjunction with orthogonal designs, they are to the best of our knowledge new.

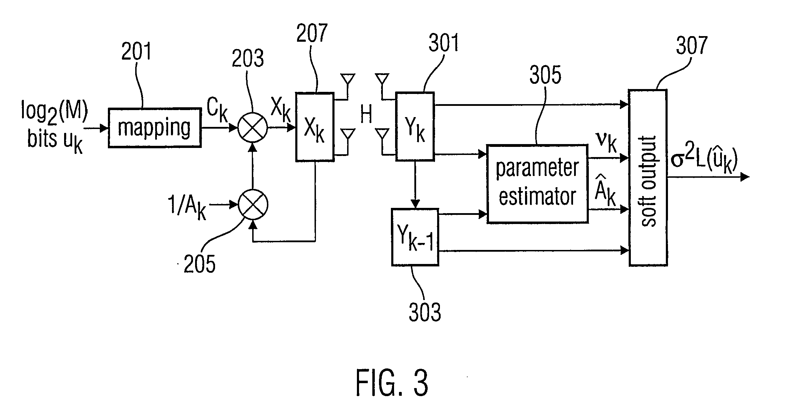

Fig. 3 demonstrates the inventive transmission system comprising the transmitter as shown in Fig. 2 and an example of a receiver. The receiver comprises a plurality of receive antennas, a receiving unit 301 being configured for providing a *k-th* set of received sequences $Y_k$. The receiver further comprises a unit 303 for providing the previously received set of received sequences $Y_{k-1}$. The receiver further provides a parameter estimator 305 being coupled to the units 301 and 303 and to a soft-output detector 307, the soft-output detector having an output or a plurality of outputs.
In the following, a soft-output detector for non-unitary differential space-time modulation will be derived.
This is an improvement over existing publications which consider hard output detection only, see e.g. M. Tao and R.S. Cheng: Differential space-time block codes, IEEE Globecom Conference, pages 1098-1102, November 2001. The detector which will be derived in this section is illuminated in Figure 3.
A simple non-coherent receiver takes into account two successively received matrices

$$Y_{k-1} = H_{k-1}X_{k-1}N_{k-1} \qquad (18)$$

$$Y_k \;=\; H_k X_k \;+\; N_k \;=\; \frac{1}{A_k} H_k X_{k-1} C_k \;+\; N_k \qquad (19)$$

where the channel is assumed to be constant during transmission of two matrices, i.e.

$$H_{k-1} \;=\; H_k \qquad (20)$$

Plugging (18) into (19) yields

$$\begin{aligned}
Y_k \;&=\; \frac{1}{A_k} Y_{k-1} C_k \;-\; \frac{1}{A_k} N_{k-1} C_k \;+\; N_k \\[2mm]
&=\; \frac{1}{A_k} Y_{k-1} C_k \;+\; \tilde{N}_k
\end{aligned} \qquad (21)$$

This describes the transmission of the info matrix $C_k$ over an equivalent channel with $L$ transmit and $n_R$ receive antennas, channel coefficients $\tilde{H} = \frac{1}{A_k} Y_{k-1}$ and additive Gaussian noise with variance

$$\tilde{\sigma}^2 \;=\; \sigma^2 \left( 1 + \frac{1}{A_k^2} \operatorname{trace}\left\{ C_k C_k^H \right\} \right) \qquad (22)$$

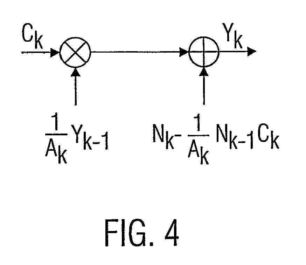

per real dimension at each virtual receive antenna, where $\sigma^2$ is the noise variance per real dimension at each receive antenna (see Fig. 4). The problem for soft output detection is that the receiver does not know $A_k$ and $C_k$. A soft-output detector requires knowledge of the parameters $A_k$ and $\sigma^2$ of the equivalent channel model.

According to (22) $\sigma^2$ is given by

$$\tilde{\sigma}^2 \;=\; \sigma^2 \left( 1 + \frac{1}{A_k^2} \operatorname{trace}\left\{ C_k C_k^H \right\} \right) \qquad (23)$$

Therefore, as far as only the effective noise variance is concerned, it is sufficient to estimate jointly the expression $1/A_k C_k$. We denote the required estimate on $\frac{1}{A_k^2} \operatorname{trace}\left\{ C_k C_k^H \right\}$ by $v_k$. One possibility to obtain estimates for those parameters is to neglect the additive noise in (21) and to compute the approximation

$$\frac{1}{A_k} C_k \;\approx\; \operatorname{inv}\{Y_{k-1}\} Y_k \qquad (24)$$

where $inv\{Y_{k-1}\}$ can e.g. be obtained by computing the Moore-Penrose-Pseudo-Inverse:

$$\frac{1}{A_k} C_k \approx \left(Y_{k-1}^H Y_{k-1}\right)^{-1} Y_{k-1}^H Y_k \tag{25}$$

However, this requires computation of a pseudo inverse and, therefore, is computationally relatively expensive. Another possibility to find an approximation of $\frac{1}{A_k^2} \text{trace}\left\{C_k C_k^H\right\}$ is to compute

$$v_k = \frac{\text{trace}\left\{Y_k^H Y_k\right\}}{\text{trace}\left\{Y_{k-1}^H Y_{k-1}\right\}} \tag{26}$$

Equation (26) yields the exact expression for $\frac{1}{A_k^2} \text{trace}\left\{C_k C_k^H\right\}$ in case of noiseless transmission if $C_k$ is an orthogonal design. Otherwise, (26) is a rough approximation.

If the normalization factor $A_k$ was not chosen independently of the transmitted data, we also need an estimate on $A_k$ itself. If on the other hand $A_k$ is a constant, the joint estimation of $1/A_k C_k$ is sufficient.

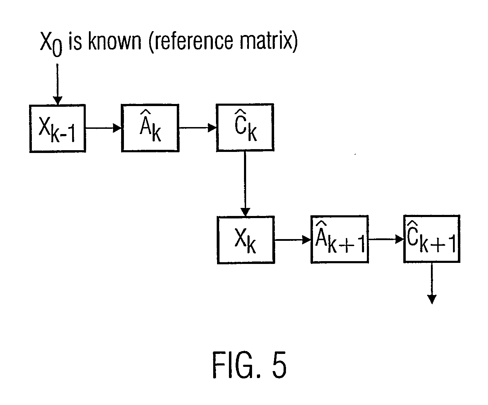

Fig. 5 demonstrates an estimation scheme for estimating the normalization factor $A_k$ based on a previous hard decision.

In the following sections, we will denote the estimated value of $A_k$ by $\hat{A}_k$. Since $\hat{A}_k$ is determined by the previously transmitted matrix $X_{k-1}$, $\hat{A}_k$ can be obtained from the hard decisions up to matrix $k$. The procedure is illustrated in Figure 5. The hard decision $\hat{C}_k$ on $C_k$ may be obtained from

$$\hat{C}_k = \arg\max_{C_k} \log p(C_k | Y_k Y_{k-1}) \tag{27}$$

which can be computed as described in the next section. Since the first transmitted matrix $X_0$ is a known reference matrix, estimates $\hat{A}_k$ on all normalization factors $A_k$ can be obtained based on the hard decisions $\tilde{C}_t$, $t < k$ taking into account the differential encoding rule (11). More precisely: Knowing $X_{k-1}$ yields $\hat{A}_k$ for detecting of $C_k$. From the hard decision $\tilde{C}_k$, we obtain an estimate for $X_k$ which yields $\hat{A}_{k+1}$ etc. The problem with this approach is that it imposes error propagation.

For non-unitary orthogonal designs, we can find another parameter estimation method which avoids error propagation but neglects noise. If the matrix $C_k$ is not based on an orthogonal design, this method is a rough approximation. We neglect the noise and approximate

$$v_k = \frac{\text{trace}\left\{Y_k^H Y_k\right\}}{\text{trace}\left\{Y_{k-1}^H Y_{k-1}\right\}} \approx \frac{\alpha_k}{A_k^2} \tag{28}$$

where $\alpha_k$ is the amplitude of the orthogonal design as defined in (13). From (14), we know that

$$A_{k+1}^2 = \alpha_k \tag{29}$$

Since the first transmitted matrix $X_0$ is a known reference matrix, $A_1$ is known at the receiver. Typically, the reference matrix will be the identity matrix and, hence, $A_1 = 1$. For $k > 1$, an estimate $\hat{A}_k$ is using (28) and (29) from

$$\hat{A}_{k+1}^2 = v_k \hat{A}_k^2 \tag{30}$$

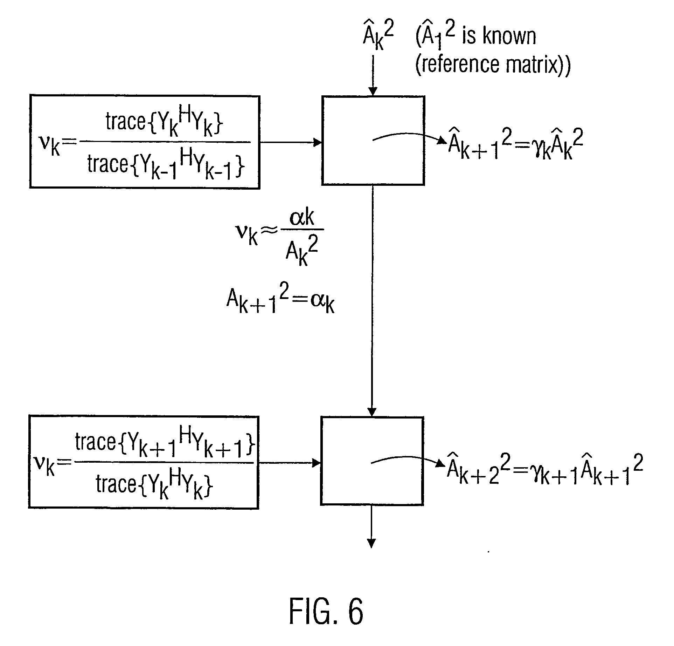

The procedure is illustrated in Figure 6.

For a soft-output detection we need to compute the logarithmic probability

$$\log p\big(C_k\big|Y_k Y_{k-1}\big) = \text{const} - \frac{1}{2\tilde{\sigma}^2}\left\|Y_k - \frac{1}{A_k}Y_{k-1}C_k\right\|^2$$

$$= \text{const} + \frac{1}{A_k\tilde{\sigma}^2}\text{trace}\big\{\text{Re}\big\{C_k Y_k^H Y_{k-1}\big\}\big\} \tag{31}$$

$$- \frac{1}{2A_k^2\tilde{\sigma}^2}\text{trace}\big\{\text{Re}\big\{C_k C_k^H Y_{k-1}^H Y_{k-1}\big\}\big\} + \frac{1}{2}u_k^T L_\alpha(u_k)$$

where

$$L_\alpha(u_k) = \big[L_\alpha(u_{k,1}, \ldots, L_\alpha(u_{k,b})\big]^T \tag{32}$$

is a vector containing the bit a priori information

$$L_\alpha(u_{k,t}) = \frac{P(u_{k,t} = +1)}{P(u_{k,t} = -1)} \tag{33}$$

for the *b* bits which are transmitted via the information matrix $C_k$. This a priori information can e.g. be obtained from a turbo feedback or from knowledge of the information bit statistics. If no a priori information is available, we have $L_\alpha(u_k)$ = 0. With the notation

$$L\big(\hat{u}_{k,t}\big) = L\big(u_{k,t}\big|Y_k Y_{k-1}\big) \tag{34}$$

the APP log-likelihood ratios are given by

$$L\big(\hat{u}_{k,t}\big) = \frac{p(u_{k,t} = +1|y_{k-1}, Y_k)}{p(u_{k,t} = -1|y_{k-1}, Y_k)}$$

$$= \frac{\displaystyle\sum_{\substack{C_k \\ u_{k,t}=+1}} p(C_k|Y_k Y_{k-1})}{\displaystyle\sum_{\substack{C_k \\ u_{k,t}=-1}} p(C_k|Y_k Y_{k-1})} \tag{35}$$

where the sum in the nominator is taken over all info matrices $C_k$ which are associated with $u_{k,t}$ = +1 and the sum in the denominator is taken over all info matrices $C_k$ associated with $u_{k,t}$ = -1. Using (31) and the max-log approximation ln $[e^{\delta_1} + e^{\delta_2}] \approx \max\{\delta_1, \delta_2\}$ we obtain

$$L(\hat{u}_{k,t}) \approx \max_{\substack{C_k \\ u_{k,t}=+1}} \left\{ \frac{1}{A_k \tilde{\sigma}^2} \operatorname{trace}\left\{ \operatorname{Re}\left\{ C_k Y_k^H Y_{k-1} \right\} \right\} \right.$$

$$\left. - \frac{1}{2A_k^2 \tilde{\sigma}^2} \operatorname{trace}\left\{ C_k C_k^H Y_{k-1}^H Y_{k-1} \right\} + \frac{1}{2} u_k^T L_\alpha(u_k) \right\}$$

$$- \max_{\substack{C_k \\ u_{k,t}=-1}} \left\{ \frac{1}{A_k \tilde{\sigma}^2} \operatorname{trace}\left\{ \operatorname{Re}\left\{ C_k Y_k^H Y_{k-1} \right\} \right\} \right.$$

$$\left. - \frac{1}{2A_k^2 \tilde{\sigma}^2} \operatorname{trace}\left\{ C_k C_k^H Y_{k-1}^H Y_{k-1} \right\} + \frac{1}{2} u_k^T L_\alpha(u_k) \right\}, \quad t = 1,\ldots,b \tag{36}$$

$$L(\hat{u}_{k,t}) \approx \max_{\substack{C_k \\ u_{k,t}=+1}} \left\{ \frac{1}{\hat{A}_k \tilde{\sigma}^2 \left(1 + \frac{1}{\hat{A}_k} \operatorname{trace}\left\{ C_k C_k^H \right\} \right)} \left[ \operatorname{trace}\left\{ \operatorname{Re}\left\{ C_k Y_k^H Y_{k-1} \right\} \right\} \right.\right.$$

$$\left. - \frac{1}{2\hat{A}_k^2} \operatorname{trace}\left\{ C_k C_k^H Y_{k-1}^H Y_{k-1} \right\} \right] + \frac{1}{2} u_k^T L_\alpha(u_k) \right\}$$

$$- \max_{\substack{C_k \\ u_{k,t}=-1}} \left\{ \frac{1}{\hat{A}_k \tilde{\sigma}^2 \left(1 + \frac{1}{\hat{A}_k} \operatorname{trace}\left\{ C_k C_k^H \right\} \right)} \left[ \operatorname{trace}\left\{ \operatorname{Re}\left\{ C_k Y_k^H Y_{k-1} \right\} \right\} \right.\right. \tag{37}$$

$$\left. - \frac{1}{2\hat{A}_k^2 \tilde{\sigma}^2} \operatorname{trace}\left\{ C_k C_k^H Y_{k-1}^H Y_{k-1} \right\} \right] + \frac{1}{2} u_k^T L_\alpha(u_k) \right\}, \quad t = 1,\ldots,b$$

Equation (36) still requires knowledge of $A_k$ and of the noise variance $\sigma^2$. An approximation $\hat{A}_k$ can be used for $A_k$ as discussed in the previous section.

In order to avoid estimation of the noise variance $\sigma^2$, we simply multiply (36) by $\sigma^2$ and compute

$$\sigma^2 L\left(\hat{u}_{k,t}\right) \approx \max_{\substack{C_k \\ u_{k,t}=+1}} \left\{ \frac{1}{\hat{A}_k\left(1+\frac{1}{\hat{A}_k}trace\left\{C_k C_k^H\right\}\right)}[\ trace\left\{Re\left\{C_k Y_k^H Y_{k-1}\right\}\right\} \right.$$

$$\left. - \frac{1}{2\hat{A}_k^2}trace\left\{C_k C_k^H Y_{k-1}^H Y_{k-1}\right\}] + \frac{\sigma^2}{2}u_k^T L_a\left(u_k\right)\right\} \tag{38}$$

$$- \max_{\substack{C_k \\ u_{k,t}=-1}} \left\{ \frac{1}{\hat{A}_k\left(1+\frac{1}{\hat{A}_k}trace\left\{C_k C_k^H\right\}\right)}[\ trace\left\{Re\left\{C_k Y_k^H Y_{k-1}\right\}\right\} \right.$$

$$\left. - \frac{1}{2\hat{A}_k^2}trace\left\{C_k C_k^H Y_{k-1}^H Y_{k-1}\right\}] + \frac{\sigma^2}{2}u_k^T L_a\left(u_k\right)\right\}, t=1,...,b$$

If the noise variance is constant over a frame, which is a reasonable assumption, all log-likelihood ratios are scaled by the constant factor $\sigma^2$. This has no effect on the hard output of an outer Viterbi or Max-Log-type APP decoder. However, the APP log-likelihood ratios of the outer decoder will also be scaled by the same factor. Even in a turbo scheme this will cause no degradation as long as only Max-Log components are applied, since the fed back a priori info is scaled as required in (38) G. Bauch and V. Franz: A comparison of soft-in/soft-out algorithms for "turbo-detection", International Conference on Telecommunications (ICT), June 1998. However, if a-priori information which is gained outside the turbo scheme is used, we need to know the noise variance for correct weighting.

If $C_k$ is an orthogonal design as described in V. Tarokh, H. Jafarkhani, and A.R. Calderbank: Space-time block codes from orthogonal designs, IEEE Transactions on Information Theory, 45(5):1456-1467, June 1999, the detector can be simplified since we can obtain decoupled expressions for the M-ary symbols $c_{k,l}$, $l = 1,...,K$. Hence, in order to find the most likely transmitted data, we need only $K$ M comparisons instead of $M^{L \cdot L}$. Starting from (19), we can apply a standard space-time block code diversity combiner, as described in the above-mentioned document where we replace the matrix $H_k$ of the channel coefficients by $Y_{k-1}$. This yields an equivalent system

$$\hat{y}_{k,l} = \frac{1}{A_k} \text{trace}\left\{Y_{k-1} Y_{k-1}^H\right\} c_{k,l} + \hat{n}_{k,l}, \ l = 1, \ldots, K \tag{39}$$

of $K$ single-input single-output (SISO) channels with noise variance

$$\hat{\sigma}^2 = \tilde{\sigma}^2 \text{trace}\left\{Y_{k-1} Y_{k-1}^H\right\} \tag{40}$$

With estimations on $\tilde{\sigma}$ and $\hat{A}_k$, we obtain

$$\log p\left(c_{k,l}\big|\hat{y}_{k,l}, Y_{k-1}\right) = \text{const} + \frac{1}{2\hat{\sigma}^2}\left(2\,\text{Re}\left\{\frac{1}{\hat{A}_k}\text{trace}\left\{Y_{k-1}Y_{k-1}^H\right\}\hat{y}_{k,l}^* c_{k,l}\right\}\right.$$

$$\left. -\frac{1}{\hat{A}_k^2}\text{trace}\left\{Y_{k-1}Y_{k-1}^H\right\}^2|c_{k,l}|^2\right) + \frac{1}{2}u_{k,l}^T L_\alpha(u_{k,l}) \tag{41}$$

$$L(\hat{u}_{k,l}) \approx \max_{\substack{c_{k,l} \\ u_{k,l}=+1}}\left\{\frac{1}{2\hat{\sigma}^2}\left(\frac{2}{\hat{A}_k}\text{trace}\left\{Y_{k-1}Y_{k-1}^H\right\}\text{Re}\left\{\hat{y}_{k,l}^* c_{k,l}\right\}\right.\right.$$

$$\left. -\frac{1}{\hat{A}_k^2}\text{trace}\left\{Y_{k-1}Y_{k-1}^H\right\}^2|c_{k,l}|^2\right)$$

$$\left. +\frac{1}{2}u_{k,l}^T L_\alpha(u_{k,l})\right\}$$

$$-\max_{\substack{c_{k,l} \\ u_{k,l}=-1}}\left\{\frac{1}{2\hat{\sigma}^2}\left(\frac{2}{\hat{A}_k}\text{trace}\left\{Y_{k-1}Y_{k-1}^H\right\}\text{Re}\left\{\hat{y}_{k,l}^* c_{k,l}\right\}\right.\right.$$

$$\left. -\frac{1}{\hat{A}_k^2}\text{trace}\left\{Y_{k-1}Y_{k-1}^H\right\}^2|c_{k,l}|^2\right)$$

$$\left. +\frac{1}{2}u_{k,l}^T L_\alpha(u_{k,l})\right\}, t = 1,\ldots,\log_2(M), l = 1,\ldots K \tag{42}$$

where $u_{k,l}$ contains the bits which determine symbol $c_{k,l}$. The APP log-likelohood ratios yield

$$L(\hat{u}_{k,l}) \approx \max_{\substack{c_{k,l} \\ u_{k,l}=+1}} \left\{ \frac{1}{\sigma^2 \left(1 + \frac{1}{\hat{A}_k} trace\{Y_{k-1}Y_{k-1}^H\}\right)} \left(\frac{1}{\hat{A}_k} Re\{\hat{y}_{k,l}^* c_{k,l}\} \right. \right.$$

$$- \frac{1}{2\hat{A}_k^2} trace\{Y_{k-1}Y_{k-1}^H\}^2 |c_{k,l}|^2 \right)$$

$$+ \frac{1}{2} u_{k,l}^T L_\alpha(u_{k,l}) \right\}$$

$$- \max_{\substack{c_{k,l} \\ u_{k,l}=-1}} \left\{ \frac{1}{\sigma^2 \left(1 + \frac{1}{\hat{A}_k} trace\{Y_{k-1}Y_{k-1}^H\}\right)} \left(\frac{1}{\hat{A}_k} Re\{\hat{y}_{k,l}^* c_{k,l}\} \right. \right.$$

$$- \frac{1}{2\hat{A}_k^2} trace\{Y_{k-1}Y_{k-1}^H\}^2 |c_{k,l}|^2 \right)$$

$$+ \frac{1}{2} u_{k,l}^T L_\alpha(u_{k,l}) \right\}, t = 1,..., \log_2(M), l = 1,...K$$

$$(43)$$

$$\sigma^2 L(\hat{u}_{k,t}) \approx \max_{\substack{C_{k,l} \\ u_{k,t}=+1}} \left\{ \frac{1}{\left[\left(1+\frac{1}{\hat{A}_k}trace\{Y_{k-1}Y_{k-1}^H\}\right)\right]} \left(\frac{1}{\hat{A}_k}\text{Re}\{\hat{y}_{k,l}^{\bullet}c_{k,l}\}\right.\right.$$

$$\left.-\frac{1}{2\hat{A}_k^2}\text{trace}\{Y_{k-1}Y_{k-1}^H\}^2|c_{k,l}|^2\right)$$

$$\left.+\frac{\sigma^2}{2}u_{k,l}^T L_a(u_{k,l})\right\}$$

$$-\max_{\substack{C_{k,l} \\ u_{k,t}=-1}} \left\{ \frac{1}{\left[\left(1+\frac{1}{\hat{A}_k}trace\{Y_{k-1}Y_{k-1}^H\}\right)\right]} \left(\frac{1}{\hat{A}_k}\text{Re}\{\hat{y}_{k,l}^{\bullet}c_{k,l}\}\right.\right.$$

$$\left.-\frac{1}{2\hat{A}_k^2}\text{trace}\{Y_{k-1}Y_{k-1}^H\}^2|c_{k,l}|^2\right)$$

$$\left.+\frac{\sigma^2}{2}u_{k,l}^T L_a(u_{k,l})\right\}, t=1,...,\log_2(M), l=1,...K$$

$$(44)$$

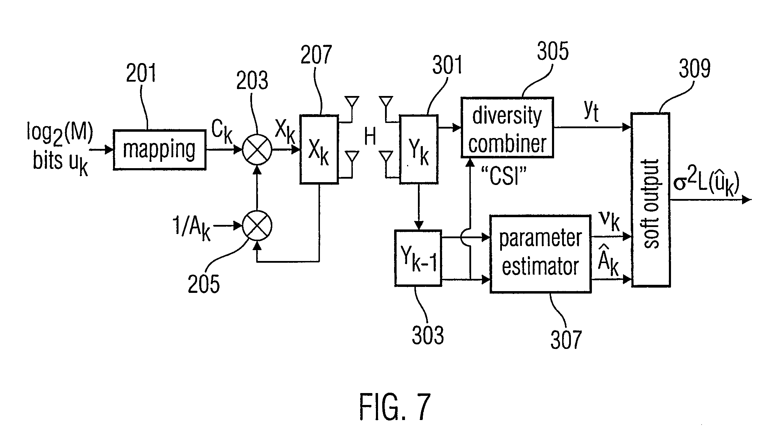

Fig. 7 shows a further embodiment of the inventive transmission scheme. Unlike the embodiment shown in Fig. 3, the receiver comprises a diversity combiner 305 coupled to the unit 301 and to the 303 being configured for providing $Y_{k-1}$ as a channel state information to the diversity 305. The receiver further comprises a parameter estimator 307 being coupled to a soft-output decoder 309, the receiver shown in Fig. 7 being configured for performing the simplified estimation scheme described enough.

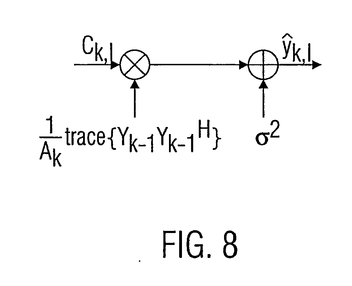

Fig. 8 demonstrates an equivalent channel module for orthogonal designs with non-coherence detection.

It is to be noted that the multiplying elements 203 and 205 may be a part of the multiplier 107.

Furthermore, the simplified detector being described with respect to orthogonal designs can also be applied for non-orthogonal designs.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing the inventive methods, when the computer program product runs on a computer. In other words, the inventive methods are, therefore, a computer program having a program code for performing the inventive methods, when the computer program runs on a computer.

**Claims**

1. Differential space-time modulation apparatus for providing a k-th set of transmit sequences from an information sequence, the k-th set of transmit sequences to be transmitted by a plurality of antennas $n_T$ within a k-th time interval, the apparatus comprising:

an assigner (101) for assigning a code matrix of a plurality of code matrices to the information sequence, the code matrix comprising code matrix entries;

a multiplier (107) for multiplying the code matrix by a *(k-1)-th* set of transmit sequences using a multiplication scheme for obtaining the k-th set of transmit sequences, the *(k-1)-th* set of transmit sequences being transmitted within a *(k-1)-th* time interval, wherein the code matrix entries are arranged to form rows and columns of the code matrix, wherein, when multiplying the (k-1)th transmit sequence by the code matrix from the right, at least a column of the code matrix is non-orthogonal with respect to a another column of the code matrix, or wherein at least a row of the code matrix is non-orthogonal with respect to another row of the code matrix when multiplying the (k-1)th transmit sequence by the code matrix from the left, and

wherein the apparatus is configured for normalizing the k-th set of transmit sequences using a normalization factor $(A_k)$.

2. Apparatus according to claim 1, wherein the code matrix is non-unitary.

3. Apparatus according to claim 1 or 2, wherein the transmit sequences in the *(k-1)-th* set of transmit sequences are arranged to form a *(k-1)-th* transmit matrix, the *(k-1)-th* transmit matrix comprising entries being arranged to form rows and columns, wherein a column of the code matrix is non-orthogonal with respect to another column of the code matrix when the multiplication scheme comprises multiplying rows of the *(k-1)-th* transmit matrix by columns of the code matrix, and wherein a row of the code matrix is non-orthogonal with respect to another row of the code matrix when the multiplication scheme comprises multiplying columns of the *(k-1)-th* transmit matrix by rows of the code matrix.

4. Apparatus according to claims 1 to 3, wherein the k-th set of transmit sequences comprises a plurality of transmit sequences, each transmit sequence to be transmitted at a different time instant within the k-th time interval, or in a transmit sequence from the k-th set of transmit sequences comprises $n_T$ values, each value to be transmitted by a different transmitting point of $n_T$ transmitting points in a time instant.

5. Apparatus according to claims 1 to 4, wherein the code matrix entries represent signal space constellation points, wherein a code matrix entry represents a signal space constellation point according to a mapping scheme, and wherein a further code matrix entry represents a signal space constellation point according to a further mapping scheme being different from the mapping scheme.

6. Apparatus according to claims 1 to 5, wherein the code matrix entries represent signal constellation points according to a mapping scheme.

7. Apparatus according to claims 4 to 6, wherein the mapping scheme comprises signal space constellation points having different phases.

8. Apparatus according to claim 6 or 7, wherein the mapping scheme comprises signal space constellation points having different amplitudes.

9. Apparatus according to claims 1 to 8, wherein the mapping scheme is one of the following mapping schemes: QPSK, PAM, QAM, PSK, M-QAM, M-PSK, M being a number equal to or greater than 1.

10. Apparatus according to claims 1 to 9, wherein the normalization factor is determined by an energy of a *(k-1)-th* matrix being formed by the *(k-1)-th* set of transmit sequences.

11. Apparatus according to claims 1 to 10, wherein the normalization factor is determined by an expectation value for an energy of a set of transmit sequences.

12. Apparatus according to claims 1 to 11, the apparatus being configured for determining the normalization factor $A_k$ based on the following equation:

$$A_k = \sqrt{\frac{1}{L} \text{trace} X_{k-1} X_{k-1}^H} \qquad (15)$$

wherein $X_{k-1}$ denotes a (k-1)-th transmit matrix, $X_k$ denotes a k-th transmit matrix, L denotes a number of columns of the k-th transmit matrix and H denotes transposition and conjugation.

13. Apparatus according to claims 1 to 12, the apparatus being configured for determining the normalization factor based on the following equation:

$$A_k = \sqrt{\frac{1}{L} \varepsilon_k \{\text{trace } X_k X_k^H\}} \qquad (16)$$

wherein $X_k$ denotes a k-th transmit matrix, L denotes a number of columns of the k-th transmit matrix and H denotes transposition and conjugation, and wherein $\varepsilon_k$ denotes the expectation operator.

14. Apparatus according to claims 1 to 13, wherein the multiplier (107) is configured for pre-multiplying the *(k-1)-th* set of transmit sequences by the normalization factor, or for pre-multiplying the code matrix by the normalization factor, or for post-multiplying the k-th set of transmit sequences by the normalization factor for normalizing.

15. Apparatus according to claims 1 to 14, the apparatus being further configured for multiplying a row or a column of the code matrix by a phase factor for avoiding zero-sequences when multiplying the code matrix by (k-1)-th set of transmit sequences.

16. Transmitter apparatus comprising

the apparatus for providing a k-th set of transmit sequences from an information sequence according to claims 1 to 15, wherein each transmit sequence in the k-th set of transmit sequences comprises $n_T$ values;
$n_T$ transmitting points for transmitting the k-th set of transmit sequences within a k-th time interval, wherein the $n_T$ transmitting points are configured for simultaneously transmitting $n_T$ values of a transmit sequence of a time instant within the k-th time interval, and for simultaneously transmitting $n_T$ values of a further transmit sequence and a further time instant within the k-th time interval.

17. Differential space-time modulation method for providing a k-th set of transmit sequences from an information sequence, the k-th set of transmit sequences to be transmitted by a plurality of antennas $n_T$ within a k-th time interval, the method comprising,

assigning a code matrix of a plurality of code matrices to the information sequence, the code matrix comprising code matrix entries;
multiplying the code matrix by a *(k-1)-th* set of transmit sequences using a multiplication scheme obtaining the k-th set of transmit sequences, the *(k-1)-th* set of transmit sequences being transmitted within a *(k-1)-th* time interval,
wherein the code matrix entries are arranged to form rows and columns of the code matrix, wherein, when multiplying the (k-1)th transmit sequence by the code matrix from the right, at least a column of the code matrix is non-orthogonal with respect to another column of the code matrix, or wherein at least a row of the code matrix is non-orthogonal with respect to a another row of the code matrix when multiplying the (k-1)th transmit sequence by the code matrix from the left, and
normalizing the k-th set of transmit sequences using a normalization factor $(A_k)$.

18. Transmitting method, comprising, the method for providing a k-th set of transmit sequences from an information sequence according to claim 17, therein each transmit sequence in the k-th set of transmit sequences comprises $n_T$ values;
transmitting the k-th set of transmit sequences within a k-th time interval, wherein $n_T$ values of the transmit sequences are transmitted at a time instant within a k-th time interval, and wherein $n_T$ values of a further transmit sequence are simultaneously transmitted at a further time instant within the k-th time interval.

19. Computer program for performing at least one of the methods according to claims 17 to 18, wherein the computer program runs on a computer.

**Patentansprüche**

1. Differenz-Raum-Zeit-Modulationsvorrichtung zum Bereitstellen eines k-ten Satzes von Sendesequenzen aus einer Informationssequenz, wobei der k-te Satz von Sendesequenzen durch eine Mehrzahl von Antennen $n_T$ innerhalb eines k-ten Zeitintervalls gesendet werden soll, wobei die Vorrichtung folgende Merkmale aufweist:

   einen Zuweiser (101) zum Zuweisen einer Codematrix von einer Mehrzahl von Codematrizen der Informationssequenz, wobei die Codematrix Codematrixeinträge aufweist;
   einen Multiplizierer (107) zum Multiplizieren der Codematrix mit einem *(k-1)-ten* Satz von Sendesequenzen unter Verwendung eines Multiplikationsschemas zum Erhalten des k-ten Satzes von Sendesequenzen, wobei der *(k-1)-te* Satz von Sendesequenzen innerhalb eines *(k-1)-ten* Zeitintervalls gesendet wird, wobei die Codematrixeinträge angeordnet sind, um Zeilen und Spalten der Codematrix zu bilden, wobei bei einem Multiplizieren der *(k-1)-ten* Sendesequenz mit der Codematrix von der Rechten zumindest eine Spalte der Codematrix nicht orthogonal mit Bezug auf eine andere Spalte der Codematrix ist, oder wobei bei einem Multiplizieren der *(k-1)-ten* Sendesequenz mit der Codematrix von der Linken zumindest eine Zeile der Codematrix nicht orthogonal mit Bezug auf eine andere Zeile der Codematrix ist, und

   wobei die Vorrichtung zum Normieren des k-ten Satzes von Sendesequenzen unter Verwendung eines Normierungsfaktors ($A_k$) konfiguriert ist.

2. Vorrichtung gemäß Anspruch 1, bei der die Codematrix nicht unitär ist.

3. Vorrichtung gemäß Anspruch 1 oder 2, bei der die Sendesequenzen in dem *(k-1)-ten* Satz von Sendesequenzen angeordnet sind, um eine *(k-1)-te* Sendematrix zu bilden, wobei die *(k-1)-te* Sendematrix Einträge aufweist, die angeordnet sind, um Zeilen und Spalten zu bilden, wobei eine Spalte der Codematrix nicht orthogonal mit Bezug auf eine andere Spalte der Codematrix ist, wenn das Multiplikationsschema ein Multiplizieren von Zeilen der *(k-1)-ten* Sendematrix mit Spalten der Codematrix aufweist, und wobei eine Zeile der Codematrix nicht orthogonal mit Bezug auf eine andere Zeile der Codematrix ist, wenn das Multiplikationsschema ein Multiplizieren von Spalten der *(k-1)-ten* Sendematrix mit Zeilen der Codematrix aufweist.

4. Vorrichtung gemäß einem der Ansprüche 1 bis 3, bei der der k-te Satz von Sendesequenzen eine Mehrzahl von Sendesequenzen aufweist, wobei jede Sendesequenz zu einem unterschiedlichen Zeitpunkt innerhalb des k-ten Zeitintervalls gesendet werden soll, oder eine Sendesequenz aus dem k-ten Satz von Sendesequenzen $n_T$ Werte aufweist, wobei jeder Wert durch einen unterschiedlichen Sendepunkt von $n_T$ Sendepunkten zu einem Zeitpunkt gesendet werden soll.

5. Vorrichtung gemäß einem der Ansprüche 1 bis 4, bei der die Codematrixeinträge Signalraumkonstellationspunkte darstellen, wobei ein Codematrixeintrag einen Signalraumkonstellationspunkt gemäß einem Abbildungsschema darstellt, und wobei ein weiterer Codematrixeintrag einen Signalraumkonstellationspunkt gemäß einem weiteren Abbildungsschema darstellt, das sich von dem Abbildungsschema unterscheidet.

6. Vorrichtung gemäß einem der Ansprüche 1 bis 5, bei der die Codematrixeinträge Signalraumkonstellationspunkte gemäß einem Abbildungsschema darstellen.

7. Vorrichtung gemäß einem der Ansprüche 4 bis 6, bei der das Abbildungsschema Signalraumkonstellationspunkte mit unterschiedlichen Phasen aufweist.

8. Vorrichtung gemäß Anspruch 6 oder 7, bei der das Abbildungsschema Signalraumkonstellationspunkte mit unterschiedlichen Amplituden aufweist.

9. Vorrichtung gemäß einem der Ansprüche 1 bis 8, bei der das Abbildungsschema eines der folgenden Abbildungsschemata ist: QPSK, PAM, QAM, PSK, M-QAM, M-PSK, wobei M eine Zahl größer oder gleich 1 ist.

10. Vorrichtung gemäß einem der Ansprüche 1 bis 9, bei der der Normierungsfaktor durch eine Energie einer *(k-1)-ten* Matrix bestimmt ist, die durch den *(k-1)-ten* Satz von Sendesequenzen gebildet ist.

11. Vorrichtung gemäß einem der Ansprüche 1 bis 10, bei der der Normierungsfaktor durch einen Erwartungswert für eine Energie eines Satzes von Sendesequenzen bestimmt ist.

**12.** Vorrichtung gemäß einem der Ansprüche 1 bis 11, wobei die Vorrichtung zum Bestimmen des Normierungsfaktors $A_k$ basierend auf der folgenden Gleichung konfiguriert ist:

$$A_k = \sqrt{\frac{1}{L}\,\text{trace}\,X_{k-1}X_{k-1}^H} \qquad (15)$$

wobei $X_{k-1}$ eine (k-1)-te Sendesequenz bezeichnet, $X_k$ eine k-te Sendematrix bezeichnet, L eine Anzahl von Spalten der k-ten Sendematrix bezeichnet und H eine Transposition und Konjugation bezeichnet.

**13.** Vorrichtung gemäß einem der Ansprüche 1 bis 12, wobei die Vorrichtung zum Bestimmen des Normierungsfaktors basierend auf der folgenden Gleichung konfiguriert ist:

$$A_k = \sqrt{\frac{1}{L}\,\varepsilon_k\left\{\text{trace}\ X_k X_k^H\right\}} \qquad (16)$$

wobei $X_k$ eine k-te Sendematrix bezeichnet, L eine Anzahl von Spalten der k-ten Sendematrix bezeichnet und H eine Transposition und Konjugation bezeichnet, und wobei $\varepsilon_k$ den Erwartungsoperator bezeichnet.

**14.** Vorrichtung gemäß einem der Ansprüche 1 bis 13, bei der der Multiplizierer (107) zum Vormultiplizieren des *(k-1)-ten* Satzes von Sendesequenzen mit dem Normierungsfaktor oder zum Vormultiplizieren der Codematrix mit dem Normierungsfaktor oder zum Nachmultiplizieren des k-ten Satzes von Sendesequenzen mit Normierungsfaktor zum Normieren konfiguriert ist.

**15.** Vorrichtung gemäß einem der Ansprüche 1 bis 14, wobei die Vorrichtung ferner zum Multiplizieren einer Zeile oder einer Spalte der Codematrix mit einem Phasenfaktor zum Vermeiden von Nullsequenzen bei dem Multiplizieren der Codematrix mit dem (k-1)-ten Satz von Sendesequenzen konfiguriert ist.

**16.** Sendervorrichtung mit
der Vorrichtung zum Bereitstellen eines k-ten Satzes von Sendesequenzen aus einer Informationssequenz gemäß einem der Ansprüche 1 bis 15, wobei jede Sendesequenz in dem k-ten Satz von Sendesequenzen $n_T$ Werte aufweist; $n_T$ Sendepunkte zum Senden des k-ten Satzes von Sendesequenzen innerhalb eines k-ten Zeitintervalls, wobei die $n_T$ Sendepunkte zum simultanen Senden von $n_T$ Werten einer Sendesequenz eines Zeitpunkts innerhalb des k-ten Zeitintervalls und zum simultanen Senden von $n_T$ Werten einer weiteren Sendesequenz und eines weiteren Zeitpunkts innerhalb des k-ten Zeitintervalls konfiguriert sind.

**17.** Differenz-Raum-Zeit-Modulationsverfahren zum Bereitstellen eines k-ten Satzes von Sendesequenzen aus einer Informationssequenz, wobei der k-te Satz von Sendesequenzen durch eine Mehrzahl von Antennen $n_T$ innerhalb eines k-ten Zeitintervalls gesendet werden soll, wobei das Verfahren folgende Schritte aufweist:

Zuweisen einer Codematrix von einer Mehrzahl von Codematrizen der Informationssequenz, wobei die Codematrix Codematrixeinträge aufweist;
Multiplizieren der Codematrix mit einem *(k-1)-ten* Satz von Sendesequenzen unter Verwendung eines Multiplikationsschemas, das den k-ten Satz von Sendesequenzen erhält, wobei der *(k-1)-te* Satz von Sendesequenzen innerhalb eines *(k-1)-ten* Zeitintervalls gesendet wird,
wobei die Codematrixeinträge angeordnet sind, um Zeilen und Spalten der Codematrix zu bilden, wobei bei einem Multiplizieren der *(k-1)-ten* Sendesequenz mit der Codematrix von der Rechten zumindest eine Spalte der Codematrix nicht orthogonal mit Bezug auf eine andere Spalte der Codematrix ist, oder wobei bei einem Multiplizieren der *(k-1)-ten* Sendesequenz mit der Codematrix von der Linken zumindest eine Zeile der Codematrix nicht orthogonal mit Bezug auf eine andere Zeile der Codematrix ist, und
Normieren des k-ten Satzes von Sendesequenzen unter Verwendung eines Normierungsfaktors ($A_k$).

**18.** Sendeverfahren mit dem Verfahren zum Bereitstellen eines k-ten Satzes von Sendesequenzen aus einer Informationssequenz gemäß Anspruch 17, wobei jede Sendesequenz in dem k-ten Satz von Sendesequenzen $n_T$ Werte aufweist; und

Senden des k-ten Satzes von Sendesequenzen innerhalb eines k-ten Zeitintervalls, wobei $n_T$ Werte der Sendesequenzen zu einem Zeitpunkt innerhalb eines k-ten Zeitintervalls gesendet werden und wobei $n_T$ Werte einer weiteren Sendesequenz simultan zu einem weiteren Zeitpunkt innerhalb des k-ten Zeitintervalls gesendet werden.

19. Computerprogramm zum Durchführen zumindest eines der Verfahren gemäß einem der Ansprüche 17 bis 18, wobei das Computerprogramm auf einem Computer abläuft.


**Revendications**

1. Appareil de modulation espace-temps différentiel pour fournir un k-ième ensemble de séquences de transmission à partir d'une séquence d'informations, le k-ième ensemble de séquences de transmission étant à transmettre par une pluralité d'antennes $n_T$ dans un k-ième intervalle de temps, l'appareil comprenant:

un attributeur (101) destiné à attribuer une matrice de codes parmi une pluralité de matrices de codes à la séquence d'informations, la matrice de codes comprenant des entrées de matrice de codes;
un multiplicateur (107) destiné à multiplier la matrice de codes par un (k-1)-ième ensemble de séquences de transmission à l'aide d'un schéma de multiplication, pour obtenir le k-ième ensemble de séquences de transmission, le (k-1)-ième ensemble de séquences de transmission étant transmis dans un (k-1)-ième intervalle de temps, où les entrées de matrice de codes sont disposées de manière à former des rangées et des colonnes de la matrice de codes, où, lors de la multiplication de la (k-1)-ième séquence de transmission par la matrice de codes à partir de la droite, au moins une colonne de la matrice de codes est non orthogonale par rapport à une autre colonne de la matrice de codes, ou bien où au moins une rangée de la matrice de codes est non orthogonale par rapport à une autre rangée de la matrice de codes, lors de la multiplication de la (k-1)-ième séquence de transmission par la matrice de codes à partir de la gauche, et

dans lequel l'appareil est configuré pour normaliser le k-ième ensemble de séquences de transmission à l'aide d'un facteur de normalisation ($A_k$).

2. Appareil selon la revendication 1, dans lequel la matrice de codes est non unitaire.

3. Appareil selon la revendication 1 ou 2, dans lequel les séquences de transmission dans le (k-1)-ième ensemble de séquences de transmission sont disposées de manière à former une (k-1)-ième matrice de codes, la (k-1)-ième matrice de codes comprenant des entrées disposées de manière à former des rangées et des colonnes, dans lequel une colonne de la matrice de codes est non orthogonale par rapport à une autre colonne de la matrice de codes lorsque le schéma de multiplication comprend la multiplication de rangées de la (k-1)-ième matrice de codes par des colonnes de la matrice de codes, et dans lequel une rangée de la matrice de codes est non orthogonale par rapport à une autre rangée de la matrice de codes lorsque le schéma de multiplication comprend la multiplication de colonnes de la (k-1)-ième matrice de codes par des rangées de la matrice de codes.

4. Appareil selon les revendications 1 à 3, dans lequel le k-ième ensemble de séquences de transmission comprend une pluralité de séquences de transmission, chaque séquence de transmission à transmettre à un moment différent dans le k-ième intervalle de temps, ou dans une séquence de transmission du k-ième ensemble de séquences de transmission comprend $n_T$ valeurs, chaque valeur étant à transmettre par un point de transmission différent parmi $n_T$ points de transmission à un moment.

5. Appareil selon les revendications 1 à 4, dans lequel les entrées de matrice de codes représentent des points de constellation spatiale de signal, dans lequel une entrée de matrice de codes représente un point de constellation spatiale de signal selon un schéma de mappage, et dans lequel une autre entrée de matrice de codes représente un point de constellation spatiale de signal selon un autre schéma de mappage différent du schéma de mappage.

6. Appareil selon les revendications 1 à 5, dans lequel les entrées de matrice de codes représentent des points de constellation de signal selon un schéma de mappage.

7. Appareil selon les revendications 4 à 6, dans lequel le schéma de mappage comprend des points de constellation spatiale de signal ayant des phases différentes.

**8.** Appareil selon la revendication 6 ou 7, dans lequel le schéma de mappage comprend des points de constellation spatiale de signal ayant des amplitudes différentes.

**9.** Appareil selon les revendications 1 à 8, dans lequel le schéma de mappage est l'un des schémas de mappage suivants: QPSK, PAM, QAM, PSK, M-QAM, M-PSK, M étant un nombre égal ou supérieur à 1.

**10.** Appareil selon les revendications 1 à 9, dans lequel le facteur de normalisation est déterminé par une énergie d'une (k-1)-ième matrice formée par le (k-1)-ième ensemble de séquences de transmission.

**11.** Appareil selon les revendications 1 à 10, dans lequel le facteur de normalisation est déterminé par une valeur de prévision d'une énergie d'un ensemble de séquences de transmission.

**12.** Appareil selon les revendications 1 à 11, l'appareil étant configuré de manière à déterminer le facteur de normalisation $A_k$ sur base de l'équation suivante:

$$A_k = \sqrt{\frac{1}{L} trace X_{k-1} X_{k-1}^H} \qquad (15)$$

où $X_{k-1}$ désigne une (k-1)-ième matrice de transmission, $X_k$ désigne une k-ième matrice de transmission, L désigne un nombre de colonnes de la k-ième matrice de transmission et H désigne transposition et conjugaison.

**13.** Appareil selon les revendications 1 à 12, l'appareil étant configuré pour déterminer le facteur de normalisation sur base de l'équation suivante:

$$A_k = \sqrt{\frac{1}{L} \varepsilon_k \left\{ trace X_k X_k^H \right\}} \qquad (16)$$

où $X_k$ désigne une k-ième matrice de transmission, L désigne un nombre de colonnes de la k-ième matrice de transmission et H désigne transposition et conjugaison, et où $\varepsilon_k$ désigne l'opérateur de prévision.

**14.** Appareil selon les revendications 1 à 13, dans lequel le multiplicateur (107) est configuré de manière à prémultiplier le (k-1)-ième ensemble de séquences de transmission par le facteur de normalisation, ou de manière à prémultiplier la matrice de codes par le facteur de normalisation, ou de manière à post-multiplier le k-ième ensemble de séquences de transmission par le facteur de normalisation, pour normalisation.

**15.** Appareil selon les revendications 1 à 14, l'appareil étant par ailleurs configuré de manière à multiplier une rangée ou une colonne de la matrice de codes par un facteur de phase pour éviter des séquences zéro lors de la multiplication de la matrice de codes par le (k-1)-ième ensemble de séquences de transmission.

**16.** Appareil transmetteur, comprenant

l'appareil destiné à fournir un k-ième ensemble de séquences de transmission à partir d'une séquence d'informations selon les revendications 1 à 15, dans lequel chaque séquence de transmission dans le k-ième ensemble de séquences de transmission comprend $n_T$ valeurs;
$n_T$ points de transmission pour transmettre le k-ième ensemble de séquences de transmission dans un k-ième intervalle de temps, dans lequel les $n_T$ points de transmission sont configurés pour transmettre simultanément $n_T$ valeurs d'une séquence de transmission d'un moment dans le k-ième intervalle de temps, et pour transmettre simultanément $n_T$ valeurs d'une autre séquence de transmission et un autre moment dans le k-ième intervalle de temps.

**17.** Procédé de modulation espace-temps différentiel pour fournir un k-ième ensemble de séquences de transmission à partir d'une séquence d'informations, le k-ième ensemble de séquences de transmission étant à transmettre par une pluralité d'antennes $n_T$ dans un k-ième intervalle de temps, le procédé comprenant

attribuer une matrice de codes parmi une pluralité de matrices de codes à la séquence d'informations, la matrice de codes comprenant des entrées de matrice de codes;

multiplier la matrice de codes par un (k-1)-ième ensemble de séquences de transmission à l'aide d'un schéma de multiplication pour obtenir le k-ième ensemble de séquences de transmission, le (k-1)-ième ensemble de séquences de transmission étant transmis dans un (k-1)-ième intervalle de temps,

dans lequel les entrées de matrice de codes sont disposées de manière à former des rangées et des colonnes de la matrice de codes, dans lequel, lors de la multiplication de la (k-1)-ième séquence de transmission par la matrice de codes à partir de la droite, au moins une colonne de la matrice de codes est non orthogonale par rapport à une autre colonne de la matrice de codes, ou dans lequel au moins une rangée de la matrice de codes est non orthogonale par rapport à une autre rangée de la matrice de codes, lors de la multiplication de la (k-1)-ième séquence de transmission par la matrice de codes à partir de la gauche, et

normaliser le k-ième ensemble de séquences de transmission à l'aide d'un facteur de normalisation ($A_k$).

18. Procédé de transmission, comprenant le procédé pour fournir un k-ième ensemble de séquences de transmission à partir d'une séquence d'informations selon la revendication 17, dans lequel chaque séquence de transmission dans le k-ième ensemble de séquences de transmission comprend $n_T$ valeurs; et

transmettre le k-ième ensemble de séquences de transmission dans un k-ième intervalle de temps, où $n_T$ valeurs des séquences de transmission sont transmises à un moment dans un k-ième intervalle de temps, et où $n_T$ valeurs d'une autre séquence de transmission sont transmises simultanément à un autre moment dans le k-ième intervalle de temps.

19. Programme d'ordinateur pour réaliser au moins l'un des procédés selon les revendications 17 à 19, dans lequel le programme d'ordinateur est exécuté sur un ordinateur.

EP 1 730 868 B1

$$C_k \cdot C_k{}^H = \begin{bmatrix} \boxtimes & \boxtimes & \cdots & \boxtimes \\ \boxtimes & \boxtimes & \cdots & \boxtimes \\ \vdots & \vdots & \ddots & \vdots \\ \boxtimes & \boxtimes & \cdots & \boxtimes \end{bmatrix}$$

$$X_k \cdot X_k{}^H = \begin{bmatrix} \boxtimes & \boxtimes & \cdots & \boxtimes \\ \boxtimes & \boxtimes & \cdots & \boxtimes \\ \vdots & \vdots & \ddots & \vdots \\ \boxtimes & \boxtimes & \cdots & \boxtimes \end{bmatrix}$$

$n_T$ antennes

$X_{k-1}$ — 109

Assigner 103 — $C_k$ — 105 — Multiplier — 111 — $X_k =$ $\begin{bmatrix} \boxtimes & \boxtimes & \cdots & \boxtimes \\ \boxtimes & \boxtimes & \cdots & \boxtimes \\ \vdots & \vdots & \ddots & \vdots \\ \boxtimes & \boxtimes & \cdots & \boxtimes \end{bmatrix}$

101

107

FIG. 1

FIG. 2

EP 1 730 868 B1

FIG. 3

FIG. 4

$X_0$ is known (reference matrix)

FIG. 5

$$\hat{A}_k{}^2 \quad (\hat{A}_1{}^2 \text{ is known} \atop \text{(reference matrix))}$$

$$\nu_k = \frac{\text{trace}\{Y_k{}^H Y_k\}}{\text{trace}\{Y_{k-1}{}^H Y_{k-1}\}}$$

$$\hat{A}_{k+1}{}^2 = \gamma_k \hat{A}_k{}^2$$

$$\nu_k \approx \frac{\alpha k}{A_k{}^2}$$

$$A_{k+1}{}^2 = \alpha_k$$

$$\nu_k = \frac{\text{trace}\{Y_{k+1}{}^H Y_{k+1}\}}{\text{trace}\{Y_k{}^H Y_k\}}$$

$$\hat{A}_{k+2}{}^2 = \gamma_{k+1} \hat{A}_{k+1}{}^2$$

FIG. 6

FIG. 7

EP 1 730 868 B1

$$C_{k,l} \otimes \longrightarrow \oplus \hat{y}_{k,l} \longrightarrow$$

$$\frac{1}{A_k}\text{trace}\{Y_{k-1}Y_{k-1}{}^H\} \qquad \sigma^2$$

FIG. 8

FIG. 9: Transmitter.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **G.J. FOSCHINI ; M.J. GANS.** On limits of wireless communications in a fading environment when using multiple antennas. *Wireless Personal Communications,* 1998, vol. 6, 311-335
- **E. TELATAR.** Capacity of multi-antenna Gaussian channels. *European Transactions on Telecommunications (ETT),* November 1999, vol. 10 (6
- **V. TAROKH ; H. JAFARKHANI.** A differential detection scheme for transmit diversity. *IEEE Journal on Selected Areas in Communications,* July 2000, vol. 18 (7), 1169-1174
- **B.L. HUGHES.** Differential space-time modulation. *IEEE Transactions on Information Theory,* November 2000, vol. 46 (7), 2567-2578
- **B. HOCHWALD ; W. SWELDEN.** Differential unitary space-time modulation. *IEEE Transactions on Communications,* December 2000, vol. 48 (12), 2041-2052
- **H. JAFARKHANI ; V. TAROKH.** Multiple transmit antenna differential detection from generalized orthogonal designs. *IEEE Transactions on Information Theory,* September 2001, vol. 47 (6), 2626-2631
- **B.L. HUGHES.** Differential space-time modulation. *IEEE Transactions on Information Theory,* December 2000, vol. 46 (7), 2567-2578
- **A. STEINER ; M. PELEG ; S. SHAMAI.** Iterative decoding of space-time differentially coded unitary matrix modulation. *IEEE Transactions on Signal Processing,* October 2002, vol. 50 (10), 2385-2395
- **X.-G. XIA.** Differentially en/decoded orthogonal space-time block codes with APSK signals. *IEEE Communications Letters,* April 2002, vol. 6 (4), 150-152
- **H. ROHLING ; V. ENGELS.** Differential amplitude phase shift keying (DAPSK) - a new modulation method for DTVB. *International Broadcasting Convention,* 1995, 102-108
- **V. TAROKH ; H. JAFARKHANI.** A differential detection scheme for transmit diversity. *IEEE Journal on Selected Areas in Communications,* vol. 18 (7), 1169-1174
- **G. BAUCH.** Turbo detection of differential multiple-length transmit diversity. *3rd International Symposium on Turbo Codes and Related Topics,* September 2003, 327-330

- **G. BAUCH.** Differential amplitude and unitary space-time modulation. *International ITG Conference on Source and Channel Coding,* January 2004, 135-142
- **M. TAO ; R.S. CHENG.** Differential space-time block codes. *IEEE Globecom Conference,* November 2001, 1098-1102
- **Z. CHEN ; G. ZHU ; J. SHEN ; Y. LIU.** Differential space-time block codes from amicable orthogonal designs. *Wireless Communications and Networking Conference (WCNC),* March 2003, 768-772
- **C.-S. HWANG ; S.H. NAM ; J. CHUNG ; V. TAROKH.** Differential space-time block codes using QAM constellations. *International Symposium on Personal, Indoor and Mobile Radio Communications (PIMRC),* September 2003
- **C.-S. HWANG ; S.H. NAM ; J. CHUNG ; V. TAROKH.** Differential space-time block codes using nonconstant modulus constellations. *IEEE Transactions on Signal Processing,* November 2003, vol. 51 (11), 2955-2964
- **YUN ZHU ; HAMID JAFARKANI.** Differential Modulation Based on Quasi-Orthogonal Codes. *Wireless Communications and Networking Conference, 2004, WCNC 204 IEEE,* 21 March 2004, vol. 1, 531-536
- **X.-G: XIA.** Differentially en/decoded orthogonal space-time block codes with APSK signals. *IEEE Communications Letters,* April 2002, vol. 6 (4), 150-152
- **G. BAUCH.** A bandwidth-efficient scheme for non-coherent transmit diversity. *IEEE Globecom,* December 2003
- **G. BAUCH.** Higher order differential matrix modulation. *IEEE International Symposium on Information Theory (ISIT),* June 2004
- **V. TAROKH ; H. JAFARKHANI ; A.R. CALDERBANK.** Space-time block codes from orthogonal designs. *IEEE Transactions on Information Theory,* June 1999, vol. 45 (5), 1456-1467
- **M. TAO ; R.S. CHENG.** Differential space-time block codes. *IEEE Globecom Conference,* November 2001, 1098-1102
- **G. BAUCH ; V. FRANZ.** A comparison of soft-in/soft-out algorithms for ''turbo-detection. *International Conference on Telecommunications (ICT),* June 1998